# EUROPEAN PATENT APPLICATION

(11) **EP 4 773 339 A1**
(43) Date of publication of application: **08.07.2026**
(21) Application number: 25816071.2
(22) Date of filing: 22.05.2025
(51) Int. Cl.: H01M 10/48, H01M 50/569, H01M 10/6551, H01M 10/613, H01R 12/77

(54) **BATTERY CELL ASSEMBLY AND BATTERY PACK COMPRISING SAME**

(30) Priority: 28.05.2024 KR 20240069450
(71) Applicant: LG Energy Solution, Ltd., Seoul 07335 (KR)
(72) Inventor: PARK, Jeong Hoon, Daejeon 34122 (KR)
(74) Representative: Hoffmann Eitle
(86) International application number: PCT/KR2025/006926
(87) International publication number: WO 2025/249829

(57) **Abstract**

Embodiments of the present disclosure provide a battery pack. The battery pack includes a plurality of battery cells arranged in a first direction, a plurality of cooling fins between the plurality of battery cells, a plurality of pads between the plurality of battery cells, a first integrated circuit assembly configured to be electrically connected to the plurality of battery cells, a second integrated circuit assembly configured to be electrically connected to the plurality of battery cells and spaced apart from the first integrated circuit assembly in a second direction perpendicular to the first direction, and a flat flexible cable (FFC) assembly between the first and second integrated circuit assemblies, and the FFC assembly includes an intermediate part overlapping the plurality of battery cells in the first direction.

## Description

### [Technical Field]

The present disclosure relates to a battery cell assembly and a battery pack including the same. The present application claims the benefit of priority based on Korean Patent Application No. 10-2024-0069450, filed on May 28, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

In a current trend toward emphasizing secondary batteries for mobility, the development of secondary battery technology is mainly aimed to reduce production costs and improve safety. A secondary battery account for a largest portion of manufacturing costs of a BEV. Therefore, a most important factor in increasing the share of BEVs compared to internal combustion engine vehicles is production costs of secondary batteries. Production costs can be reduced by reducing raw materials, reducing the number of steps in a production process, and reducing a tact time. The safety of a secondary battery is directly related to the lives of occupants of mobility and thus is very important. A key task to enhance the safety of a secondary battery is to provide a cooling solution for a battery pack.

### [Disclosure]

### [Technical Problem]

The present disclosure is directed to providing a battery cell assembly with improved cooling efficiency and a battery pack including the same.

### [Technical Solution]

Embodiments of the present disclosure provide a battery pack. The battery pack includes a plurality of battery cells arranged in a first direction, a plurality of cooling fins interposed between the plurality of battery cells, a plurality of pads interposed between the plurality of battery cells, a first integrated circuit assembly configured to be electrically connected to the plurality of battery cells, a second integrated circuit assembly configured to be electrically connected to the plurality of battery cells and spaced apart from the first integrated circuit assembly in a second direction perpendicular to the first direction, and a flat flexible cable (FFC) assembly interposed between the first and second integrated circuit assemblies, and the FFC assembly includes an intermediate part overlapping the plurality of battery cells in the first direction.

The FFC assembly may include a first connection part overlapping a first battery cell, which is one of the plurality of battery cells, in a third direction perpendicular to each of the first and second directions.

The first connection part may be connected to the first integrated circuit assembly.

The FFC assembly may further include a second connection part overlapping the first battery cell in the third direction.

The second connection part may be connected to the second integrated circuit assembly.

The second connection part may be spaced apart from the first connection part with the intermediate part therebetween.

Each of the plurality of cooling fins may include a contact part overlapping the plurality of battery cells in the first direction and a heat dissipation part overlapping a corresponding one of the plurality of battery cells in the third direction, and each of the first and second connection parts may be interposed between the first battery cell and the heat dissipation part of one of the plurality of cooling fins.

The FFC assembly may further include a first sensor support part spaced apart from the intermediate part in the first direction, and a second sensor support part spaced apart from the intermediate part in the first direction, and the first sensor support part and the second sensor support part may be spaced apart from each other in the second direction.

The sensor support part may be connected to the first connection part, and the second sensor support part may be connected to the second connection part.

The FFC assembly may further include a first temperature sensor on the first sensor support part and a second temperature sensor on the second sensor support part.

Each of the first and second temperature sensors may be spaced apart from each of the plurality of cooling fins.

The first and second temperature sensors may be interposed between the first battery cell and one of the plurality of pads.

The intermediate part may include first and second portions extending in a third direction perpendicular to each of the first and second directions, and a third portion interposed between the first and second portions.

The third portion may extend in the second direction.

### [Advantageous Effects]

A flat flexible cable (FFC) assembly according to embodiments of the present disclosure may include a part between a battery cell and a pad. Accordingly, it is possible to prevent an increase in thermal resistance due to FFC assemblies and damage to the FFC assemblies due to cooling fins, and to improve the reliability of a battery cell assembly and a battery pack including the battery cell assembly.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a perspective view for describing a battery pack according to embodiments.
FIG. 2 is an exploded perspective view of a battery pack according to embodiments.
FIG. 3 is a perspective view of a battery cell assembly according to embodiments.
FIG. 4 is a cross-sectional view taken along line 3I-3I' of FIG. 3.
FIG. 5 is a cross-sectional view taken along line 3II-3II' of FIG. 3.
FIG. 6 is a cross-sectional view taken along line 3III-3III' of FIG. 3.
FIG. 7 is a cross-sectional view taken along line 3IV-3IV' of FIG. 3.
FIG. 8 is a cross-sectional view taken along line 3V-3V' of FIG. 3.
FIG. 9 illustrates a combination of a battery cell and a flat flexible cable (FFC) assembly.
FIG. 10 is a perspective view of an FFC assembly according to embodiments.
FIG. 11 is a perspective view of an FFC assembly according to other embodiments.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First and Second Embodiments)

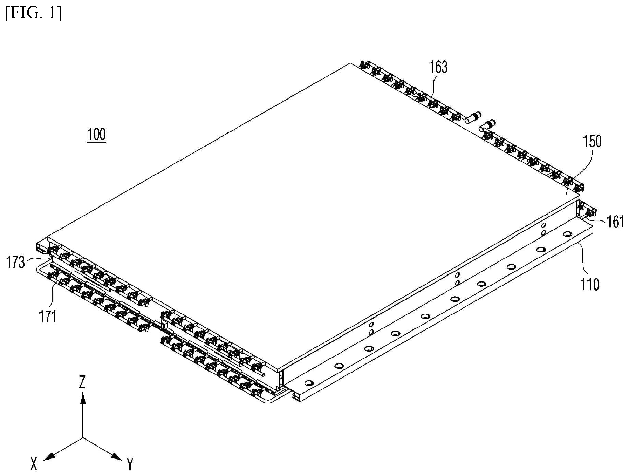

FIG. 1 is a perspective view for describing a battery pack 100 according to embodiments.

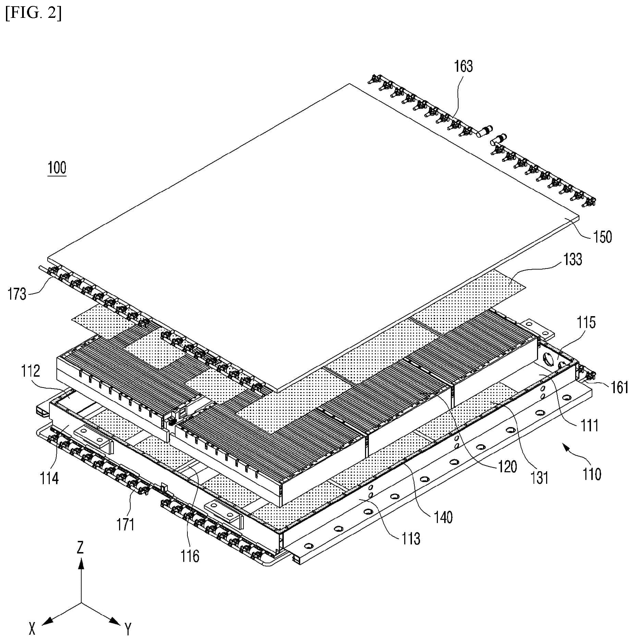

FIG. 2 is an exploded perspective view of the battery pack 100 according to embodiments.

Referring to FIGS. 1 and 2, the battery pack 100 may include a housing 110, a plurality of battery cell assemblies 120, first thermal interface material (TIM) layers 131, second TIM layers 133, a gasket 140, a lid 150, a lower injection pipe 161, an upper injection pipe 163, a lower recovery pipe 171, and an upper recovery pipe 173. The battery pack 100 is a final form of a battery system to be mounted in a mobility or the like.

The housing 110 may provide a space for arranging the plurality of battery cell assemblies 120 therein. The housing 110 may include a base plate 111, side walls 112, 113, 114, and 115, and a center beam 116.

Two directions substantially parallel to a mounting surface of the base plate 111 are defined as an X-axis direction and a Y-axis direction, and a direction substantially perpendicular to the mounting surface of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

Each of the base plate 111 and the side walls 112 and 113 may be provided by an extrusion process. An extrusion direction of each of the base plate 111 and the side walls 112 and 113 may be the X-axis direction. That is, a YZ cross-section of each of the base plate 111 and the side walls 112 and 113 may be constant according to a position in the X-axis direction except for deformation due to additional tooling. Here, the YZ cross-section may be substantially parallel to the Y-axis direction and the Z-axis direction and be substantially perpendicular to the X-axis direction. The base plate 111 and the side walls 112 and 113 may be arranged in the Y-axis direction. The side walls 114 and 115 may also be provided by the extrusion process.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate on a midpoint between the plurality of unit plates coupled together by friction stir welding. Accordingly, the center beam 116 may be formed together with the center plate in the extrusion process and be an element integrally formed with the center plate.

The base plate 111 may include a plurality of first cooling channels. The plurality of first cooling channels may provide a passage for moving, for example, a refrigerant such as water. The plurality of first cooling channels may be formed by the extrusion process. The plurality of first cooling channels may extend in the X-axis direction. The plurality of first cooling channels may be spaced apart from each other in the Y-axis direction.

The first cooling channels of the base plate 111 may be connected to the lower injection pipe 161 and the lower recovery pipe 171. A cooling fluid introduced through the lower injection pipe 161 may flow through the first cooling channels and be recovered by the lower recovery pipe 171.

The plurality of battery cell assemblies 120 may be on the base plate 111 of the housing 110. The base plate 111 may support the plurality of battery cell assemblies 120. The side walls 112, 113, 114, and 115 may horizontally surround the plurality of battery cell assemblies 120.

The first TIM layers 131 may be interposed between the plurality of battery cell assemblies 120 and the base plate 111. The first TIM layers 131 may include a resin composition. The first TIM layers 131 may be provided by a process of applying a thermal resin. The first TIM layers 131 may prevent an air layer from being formed between the base plate 111 and battery cells 121, thereby promoting the cooling of the plurality of battery cell assemblies 120. The first TIM layers 131 may be in contact with the battery cells 121 of the plurality of battery cell assemblies 120 and the base plate 111.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

The center beam 116 may extend in the X-axis direction. The center beam 116 may be on a central area of the base plate. The center beam 116 may isolate the battery cell assemblies 120 from each other. The center beam 116 may be interposed between the battery cell assemblies 120.

In the present example, the plurality of battery cell assemblies 120 are arranged in two rows and three columns. Accordingly, it may be understood that the plurality of battery cell assemblies 120 are arranged in a 3x2 array. A battery pack including the plurality of battery cell assemblies 120 arranged in an MxN array would be easily derived by those of ordinary skill in the art, based on the above description. Here, M and N are each an integer of 2 or more.

The lid 150 may be coupled to the side walls 112, 113, 114 and 115. The lid 150 may be fixed to the side walls 112, 113, 114 and 115 by a mechanical means such as a bolt. The lid 50 may cover elements, such as the battery cell assemblies 120 and electronic components, inside the battery pack 100. The gasket 140 may be interposed between the lid 150 and the side walls 112, 113, 114, and 115. The gasket 140 may provide a liquid seal to the battery pack 100.

According to embodiments, the lid 150 may be provided by the extrusion process. The lid 150 may include a plurality of second cooling channels. The plurality of second cooling channels may provide a passage for moving, for example, a refrigerant such as water. The plurality of second cooling channels may be formed by the extrusion process. The plurality of second cooling channels may extend in the X-axis direction. The plurality of second cooling channels may be spaced apart from each other in the Y-axis direction.

The second cooling channels of the lid 150 may be connected to the upper injection pipe 163 and the upper recovery pipe 173. A cooling fluid introduced through the upper injection pipe 163 may flow through the second cooling channels and be recovered by the upper recovery pipe 173.

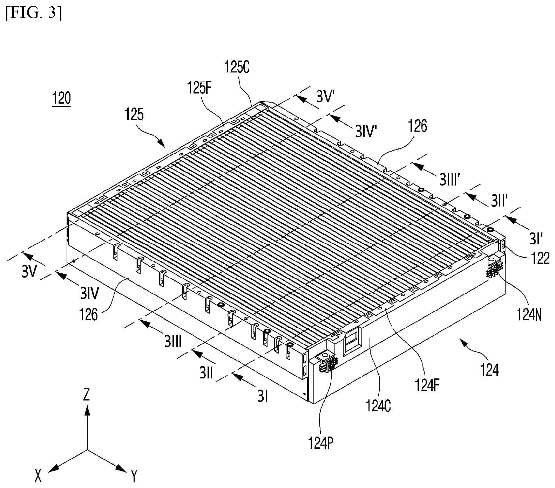

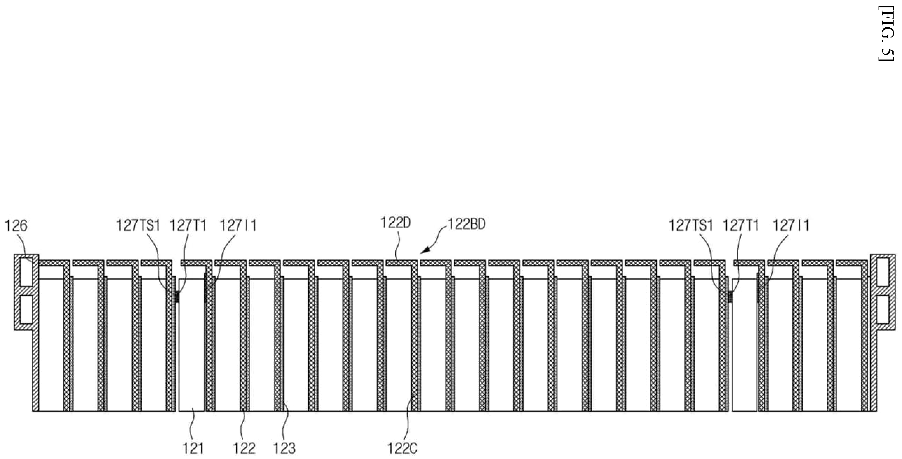

The second TIM layers 133 may be interposed between the lid 150 and the battery cell assemblies 120. The second TIM layers 133 may be heat transfer pads. Each of the second TIM layers 133 may be spaced apart from the plurality of battery cells 121. Each of the second TIM layers 133 may be in contact with a plurality of cooling fins 122 (see FIG. 3). Each of the second TIM layers 133 may be in contact with heat dissipation parts 122D (see FIG. 3) of the plurality of cooling fins 122 (see FIG. 3). Each of the second TIM layers 133 may be in contact with the lid 150. The heat dissipation part 122D (see FIG. 5) of each of the plurality of cooling fins 122 (see FIG. 3) may be spaced apart from the lid 150 with the second TIM layers 133 therebetween.

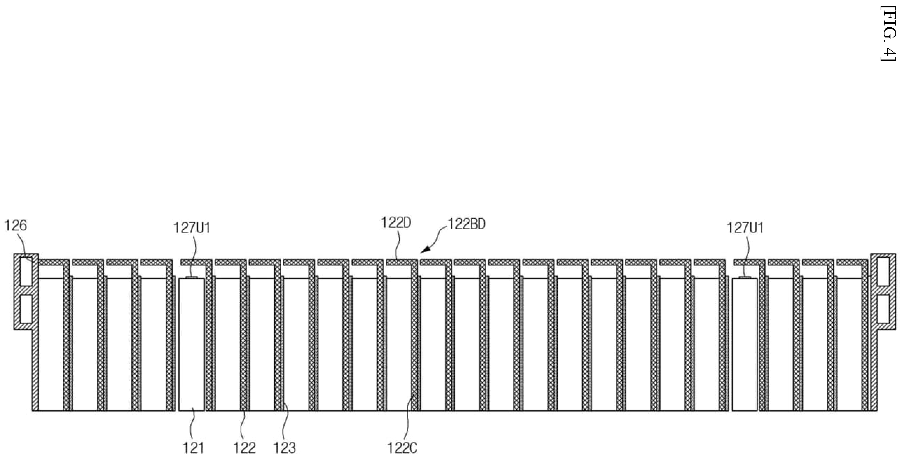

According to embodiments, the plurality of cooling fins 122 (see FIG. 4) are provided to be in contact with the plurality of battery cells 121 (see FIG. 4) and to cover terrace parts of the plurality of battery cells 121. Accordingly, an air layer may be prevented from being formed between the plurality of battery cells 121 and the second TIM layers 133 due to terraces of the plurality of battery cells 121 (see FIG. 4), and cooling efficiency of the battery pack 100 may be improved. Here, the terraces are sealing parts of a case of the plurality of battery cells 121.

According to embodiments, because a lower part of each of the plurality of battery cells 121 (i.e., a part of each of the plurality of battery cells 121 adjacent to the base plate 111) is in direct contact with the first TIM layers 131, an air layer may be prevented from being formed between the base plate 111 and the base plate 111, and the cooling efficiency of the battery pack 100 may be improved.

The battery pack 100 may further include exhaust devices coupled to the side wall 115. When a thermal runaway event occurs in the battery pack 100, the exhaust devices may discharge a high-temperature gas and flames from the inside of the battery pack 100 to delay thermal propagation.

Here, a thermal runaway state of the plurality of battery cell assemblies 120 is a state in which a change of temperature of the plurality of battery cell assemblies 120 accelerates the change of temperature, i.e., uncontrollable positive feedback. A temperature of the plurality of battery cell assemblies 120 that are in the thermal runaway state sharply increases, and a large amount of a high-pressure gas and combustion debris are discharged.

The battery pack 100 may further include electronic components. The electronic components may include an electronic device required to drive the battery pack 100. The electronic components may be on an electronic component mounting region EMR.

The electronic components may include, for example, a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

The battery pack 100 may further include a plurality of exhaust devices. The plurality of exhaust devices may be installed on one of the lid 150 and the side walls 112, 113, 114, and 115. The plurality of exhaust devices may provide a path for discharging a high-temperature gas from the inside of the battery pack 100 to the outside when the thermal runaway event occurs in some of the plurality of battery cell assemblies 120. Accordingly, thermal propagation may be delayed, and the stability of the battery pack 100 may be improved.

FIG. 3 is a perspective view of a battery cell assembly according to embodiments.

FIG. 4 is a cross-sectional view taken along line 3I-3I' of FIG. 3.

FIG. 5 is a cross-sectional view taken along line 3II-3II' of FIG. 3.

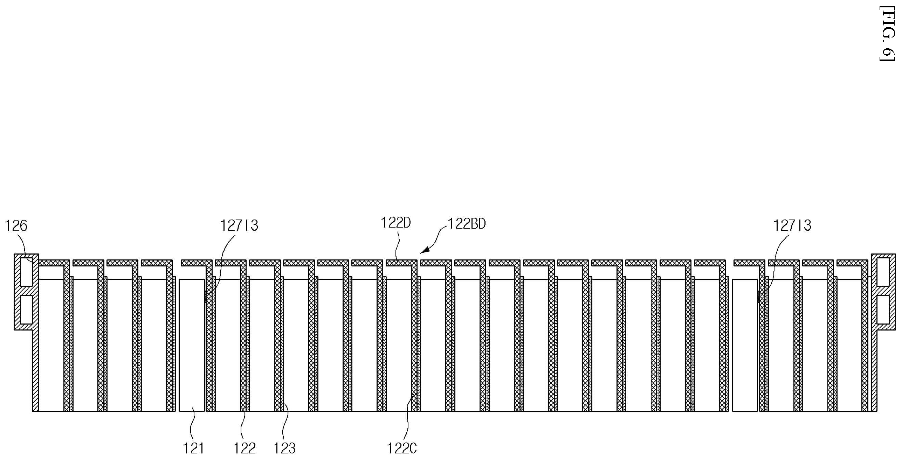

FIG. 6 is a cross-sectional view taken along line 3III-3III' of FIG. 3.

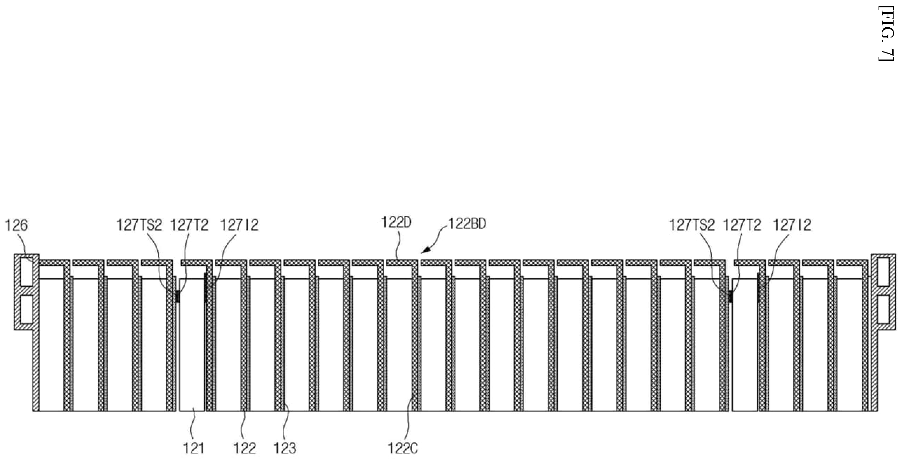

FIG. 7 is a cross-sectional view taken along line 3IV-3IV' of FIG. 3.

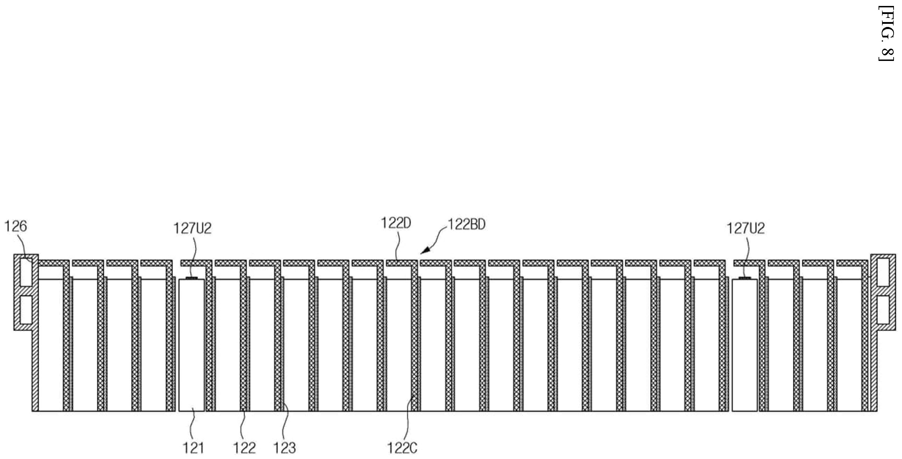

FIG. 8 is a cross-sectional view taken along line 3V-3V' of FIG. 3.

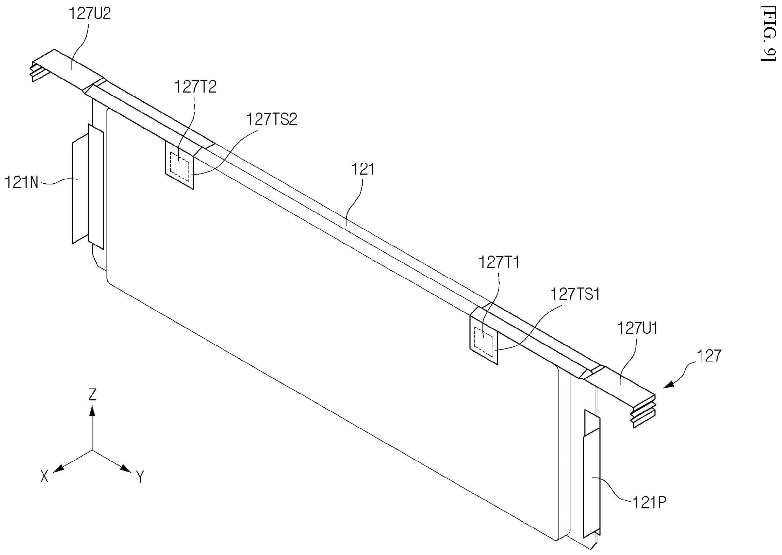

FIG. 9 illustrates a combination of a battery cell and a flat flexible cable (FFC) assembly.

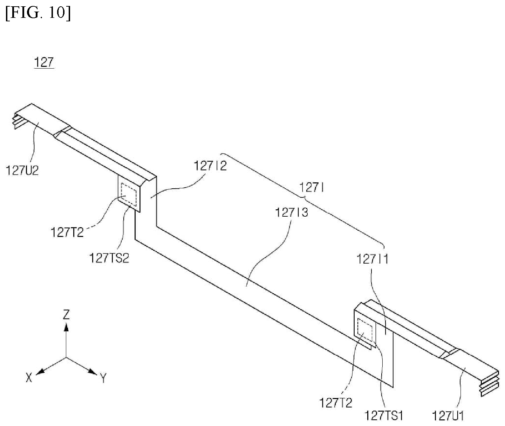

FIG. 10 is a perspective view of an FFC assembly according to embodiments.

Referring to FIGS. 3 to 10, each of a plurality of battery cell assemblies 120 may include a plurality of battery cells 121, a plurality of cooling fins 122, a plurality of pads 123, a first circuit assembly 124, a second circuit assembly 125, and side beams 126.

Each of the plurality of battery cells 121 may be a lithium ion battery. Each of the plurality of battery cells 121 includes an electrode assembly, an electrolyte, and a case. Each of the plurality of battery cells 121 may be a cylindrical battery cell, a prismatic battery cell, or a pouch type battery cell. A case of the cylindrical battery cell may be a cylindrical metal can. An electrode assembly of the cylindrical battery cell is embedded in a cylindrical metal can. A case of the prismatic batteries cell may be a prismatic metal case. An electrode assembly of the prismatic battery cell is embedded in a prismatic metal can. A case of the pouch type battery cell may be a pouch sheet. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. A jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are sequentially stacked, and a plurality of separators therebetween.

A positive electrode lead 121P of each of the plurality of battery cells 121 may be connected to a positive electrode tab of a positive electrode. The positive electrode lead 121P may be welded to the positive electrode tab of the positive electrode. A negative electrode lead 121N of each of the plurality of battery cells 121 may be connected to a negative electrode tab of a negative electrode. The negative electrode lead 121N may be welded to the negative electrode tab of the negative electrode.

Each of the plurality of battery cells 121 may be a bidirectional cell, and the positive electrode lead 121P and the negative electrode lead 121N of each of the plurality of battery cells 121 may protrude from a case 121C of each of the plurality of battery cells 121 in opposite directions. The positive electrode lead 121P and the negative electrode lead 121N may be spaced apart from each other in the Y-axis direction.

The plurality of battery cells 121 may form a plurality of banks. Each of the plurality of banks may include one or more battery cells 121. The one or more battery cells 121 of each of the plurality of banks may be connected to each other in parallel. The plurality of banks may be connected to each other in series. The number of banks connected in series and the number of battery cells 121 included in the plurality of banks may be determined according to a voltage and a current to be output from each of the battery cell assemblies 120.

The plurality of cooling fins 122 may be interposed between the plurality of battery cells 121. The plurality of cooling fins 122 and the plurality of battery cells 121 may alternate in the X-axis direction. One of the plurality of cooling fins 122 may be interposed between adjacent battery cells 121. One of the plurality of battery cells 121 may be interposed between adjacent cooling fins 122.

Each of the plurality of cooling fins 122 may have high thermal conductivity. Each of the plurality of cooling fins 122 may include, for example, a metal material such as aluminum and stainless steel.

The plurality of cooling fins 122 may have a Γ-shape. Each of the plurality of cooling fins 122 may include a contact part 122C perpendicular to the base plate 111, a heat dissipation part 122D connected to the contact part 122C and facing the lid 150, and a bent part 122BD connecting the contact part 122C and the heat dissipation part 122D.

The contact part 122C of each of the plurality of cooling fins 122 may be substantially perpendicular to the X-axis direction. The contact part 122C of each of the plurality of cooling fins 122 may be inclined in the X-axis direction. The heat dissipation part 122D of each of the plurality of cooling fins 122 may be substantially perpendicular to the Z-axis direction. The heat dissipation part 122D of each of the plurality of cooling fins 122 may be inclined in the Z-axis direction.

The contact part 122C of each of the plurality of cooling fins 122 may be interposed between the plurality of battery cells 121. The contact part 122C of each of the plurality of cooling fins 122 may overlap the plurality of battery cells 121 in the X-axis direction. The contact part 122C of each of the plurality of cooling fins 122 may be in contact with a corresponding one of the plurality of battery cells 121. Accordingly, heat emitted from the plurality of battery cells 121 may be discharged through a corresponding one of the plurality of cooling fins 122.

The contact part 122C of each of the plurality of cooling fins 122 may include a hollow 122H. The hollow 122H of each of the plurality of cooling fins 122 may have an approximately quadrangular shape. The contact part 122C of each of the plurality of cooling fins 122 may be an approximately quadrangular plate but is not limited thereto. The contact part 122C of each of the plurality of cooling fins 122 and the hollow 122H of each of the plurality of cooling fins 122 may each have a cross shape, a star shape or a polygonal shape. The hollow 122H of each of the plurality of cooling fins 122 may include round corners. A position, shape, and size of the hollow 122H may be determined based on conditions related to absorbing the swelling of the plurality of battery cells 121 and the cooling efficiency of the plurality of battery cells 121.

Generally, when a battery cell is operated, a temperature of an edge part of the battery cell may be higher than a temperature of a central part of the battery cell. Accordingly, the cooling performance of the battery cell assembly 120 may be high although the contact part 122C of each of the plurality of cooling fins 122H is in contact with edge parts of only one of the first and second surfaces 121S1 and 121S2 due to the hollow 122H.

The heat dissipation part 122D of each of the plurality of cooling fins 122 may face the lid 150 (see FIG. 2). The heat dissipation part 122D of each of the plurality of cooling fins 122 may be in contact with a corresponding one of the second TIM layers 133 (see FIG. 2). The heat dissipation part 122D of each of the plurality of cooling fins 122 may overlap a corresponding one of the plurality of battery cells 121 in the Z-axis direction. The heat dissipation part 122D may be substantially perpendicular to the contact part 122C. The heat dissipation part 122D may be oblique to the contact part 122C. The heat dissipation part 122D may protrude from an end portion of the contact part 122C in the X-axis direction. A length of the heat dissipation part 122D in the X-axis direction may be substantially the same as a length of each of the battery cells 121 in the X-axis direction but is not limited thereto.

The plurality of pads 123 may be interposed between the plurality of battery cells 121. The plurality of pads 123 and the plurality of battery cells 121 may alternate in the X-axis direction. One of the pads 123 may be interposed between adjacent battery cells 121. One of the plurality of battery cells 121 may be interposed between adjacent pads 123.

Each of the plurality of pads 123 may have an approximately quadrangular shape. The plurality of pads 123 may absorb a change in width of the plurality of battery cells 121 in the X-axis direction due to the swelling of the plurality of battery cells 121. According to embodiments, each of the plurality of pads 123 may include an elastic material. According to embodiments, each of the plurality of pads 123 may include polyurethane (PU). According to embodiments, each of the plurality of pads 123 may include a fire-resistant material.

According to embodiments, the plurality of battery cells 121, the plurality of cooling fins 122, and the plurality of pads 123 may alternate in the X-axis direction. One of the plurality of battery cells 121 may be subsequent to each of the plurality of pads 123, one of the plurality of cooling fins 122 may be subsequent to the subsequent battery cell 121, and another of the plurality of pads 123 may be subsequent to the subsequent cooling fin 122. The above-described arrangement of the plurality of battery cells 121, the plurality of pads 123, and the plurality of cooling fins 122 may be repeated. That is, the plurality of battery cells 121, the plurality of pads 123, and the plurality of cooling fins 122 may be repeated in an order of a pad 123, a battery cell 121, and a cooling fin 122. Those of ordinary skill in the art will be able to easily derive various examples in which a pads 123, a battery cells 121, and a cooling fin 122 are repeated in arbitrary permutation. An example of a permutation different from that of FIG. 2 includes repetition of a battery cell 121, a pad 123, and a cooling fin 122.

The plurality of cooling fins 122 and the plurality of pads 123 may be coupled to the plurality of battery cells 121. The plurality of cooling fins 122 and the plurality of pads 123 may be fixed to the plurality of battery cells 121 via, for example, an adhesive.

The first integrated circuit assembly 124 and the second integrated circuit assembly 125 may be spaced apart from each other in the Y-axis direction with the plurality of battery cells 121 therebetween. The first integrated circuit assembly 124 may include an insulating frame 124F, a first integrated circuit (not shown), bus bars 124P and 124N, and an insulating cover 124C. The second integrated circuit assembly 125 may include an insulating frame 125F, a second integrated circuit (not shown), and an insulating cover 125C. The second integrated circuit assembly 125 is substantially the same as the first integrated circuit assembly 124, except that the second integrated circuit assembly 125 does not include bus bars.

The insulating frame 124F may include an insulating material such as plastic. The insulating frame 124F may cover front sides of the plurality of battery cells 121. The insulation frame 124F may support the first integrated circuit, the bus bars 124P and 124N, and the sensing plates.

The bus bar 124P may be short-circuited to a positive electrode lead 121P of each of one or more battery cells 121 of a first bank, and the bus bar 124N may be short-circuited to a negative electrode lead 121N of each of one or more battery cells 121 of a last bank. The bus bar 124P may be short-circuited to the positive electrode lead 121P of each of the one or more battery cells 121 of the first bank, and the bus bar 124N may be welded to the negative electrode lead 121N of each of the one or more battery cells 121 of the last bank. Resulting voltages of the plurality of battery cells 121 may be output through the bus bars 124P and 124N. The bus bars 124P and 124N may be fixed to the insulating frame 124F.

The first integrated circuit may be mounted on the insulating frame 124F. Positive electrode leads and negative electrode leads that are welded together may form nodes inside the battery cell assembly 120. The first integrated circuit may be configured to measure voltages of the nodes.

The insulating cover 124C may include an insulating material such as plastic. The insulating cover 124C may be interference-fitted into the insulating frame 124F. The insulating cover 124C may cover the first integrated circuit and thus electrical elements of the first integrated circuit assembly 124 may be protected.

The insulating frame 125F may be substantially the same as the insulating frame 124F. The insulating frame 125F may support the second integrated circuit and the sensing plates. The second integrated circuit may be mounted on the insulating frame 124F. The second integrated circuit may be configured to measure voltages of the nodes inside the battery cell assembly 120. The insulating cover 125C may include an insulating material such as plastic. The insulating cover 125C may be interference-fitted into the insulating frame 125F.

The side beams 126 may be spaced apart from each other with the plurality of battery cells 121 therebetween. The side beams 126 may cover the plurality of battery cells 121. The side beams 126 may horizontally support the plurality of battery cells 121. The side beams 126 may be fixed to the plurality of battery cells 121 via an adhesive material or the like.

According to embodiments, the side beams 126 may have the same shape. According to embodiments, the side beams 126 may be symmetrically arranged. The pack housing 110 (see FIG. 2) may include supporting beams extending in the Y-axis direction, and each of the side beams 126 may be coupled to a corresponding one of the supporting beams of the pack housing 110 (see FIG. 2) when loaded onto the pack housing 110 (see FIG. 2). The side beams 126 may be each fastened to the corresponding one of the supporting beams by a mechanical method such as bolting.

The FFC assemblies 127 may be interposed between the first integrated circuit assembly 124 and the second integrated circuit assembly 125. The FFC assemblies 127 may be connected to the integrated circuit of the first integrated circuit assembly 124 and the second integrated circuit of the second integrated circuit assembly 125. Accordingly, measured values (e.g., voltage and/or current of each of a plurality of nodes) sensed by the second integrated circuit of the second integrated circuit assembly 125 may be transmitted to the first integrated circuit of the first integrated circuit assembly 124 through the FFC assembly 127.

Each of the FFC assemblies 127 may include a first connection part 127U1, a second connection part 127U2, an intermediate part 127I, temperature sensors 127T1 and 127T2, and sensor support parts 127TS1 and 127TS2.

Each of the first and second connection parts 127U1 and 127U2 may include a terminal for external connection. The first connection part 127U1 may include a connection port for connection to the first integrated circuit of the first integrated circuit assembly 124. The second connection part 127U2 may include a connection port for connection to the second integrated circuit of the second integrated circuit assembly 125.

The first connection part 127U1 may extend in the Y-axis direction. The first connection part 127U1 may be substantially perpendicular to the Z-axis direction. A length of the first connection part 127U1 in the Y-axis direction may be greater than a width of the first connection part 127U1 in the X-axis direction. The length of the first connection part 127U1 in the Y-axis direction may be greater than a thickness of the first connection part 127U1 in the Z-axis direction. The first connection part 127U1 may be on one of the plurality of battery cells 121. The first connection part 127U1 may be interposed between one of the plurality of battery cells 121 and the heat dissipation part 122D of the cooling fin 122 corresponding to the battery cell 121.

The second connection part 127U2 may extend in the Y-axis direction. The second connection part 127U2 may be substantially perpendicular to the Z-axis direction. A length of the second connection part 127U2 in the Y-axis direction may be greater than a width of the second connection part 127U2 in the X-axis direction. The length of the second connection part 127U2 in the Y-axis direction may be greater than a thickness of the second connection part 127U2 in the Z-axis direction. The second connection part 127U2 may be on one of the plurality of battery cells 121. The second connection part 127U2 may be interposed between one of the plurality of battery cells 121 and the heat dissipation part 122D of the cooling fin 122 corresponding to the battery cell 121.

The intermediate part 127I may include first to third portions 127I1, 127I2, and 127I3. The third portion 12713 may be interposed between the first and second portions 127I1 and 127I2. The first and second portions 127I1 and 127I2 may be spaced apart from each other in the Y-axis direction. The first and second portions 127I1 and 127I2 may overlap each other in the Y-axis direction.

The first portion 127I1 may be connected to the first connection part 127U1. The first portion 127I1 may extend in the Z-axis direction. The first portion 127I1 may be substantially perpendicular to the X-axis direction. A length of the first portion 127I1 in the Z-axis direction may be greater than a width of the first portion 127I1 in the Y-axis direction. The length of the first portion 127I1 in the Z-axis direction may be greater than a thickness of the first portion 127I1 in the X-axis direction.

The second portion 127I2 may be connected to the first connection part 127U1. The second portion 12712 may extend in the Z-axis direction. The second portion 127I2 may be substantially perpendicular to the X-axis direction. A length of the second portion 127I2 in the Z-axis direction may be greater than a width of the second portion 127I2 in the Y-axis direction. The length of the second portion 127I2 in the Z-axis direction may be greater than a thickness of the second portion 127I2 in the X-axis direction.

The third portion 12713 may be connected to each of the first and second portions 127I1 and 127I2. The third portion 127I3 may extend in the Y-axis direction. The third portion 127I3 may be substantially perpendicular to the X-axis direction. A length of the third portion 12713 in the Y-axis direction may be greater than a width of the third portion 12713 in the Z-axis direction. The length of the third portion 127I3 in the Y-axis direction may be greater than a thickness of the third portion 127I3 in the X-axis direction. The third portion 12713 may be on the battery cell 121. The third portion 127I3 may be interposed between the battery cells 121 and the contact part 122C of the cooling fin 122.

The length of the third portion 127I3 in the Y-axis direction may be different from the length of each of the first and second connection parts 127U1 and 127U2 in the Y-axis direction. The length of the third portion 127I3 in the Y-axis direction may be greater than the length of each of the first and second connection parts 127U1 and 127U2 in the Y-axis direction but is not limited thereto.

The first sensor support part 127TS1 may be connected to the first connection part 127U1. A first temperature sensor 127T1 may be on the first sensor support part 127TS1. The first temperature sensor 127T1 may be coupled to the first sensor support part 127TS1, and a temperature of the battery cell 121 measured by the first temperature sensor 127T1 may be collected by the integrated circuit of the first integrated circuit assembly 124.

The first temperature sensor 127T1 may be interposed between a corresponding one of the plurality of battery cells 121 and a corresponding one of the plurality of pads 123. The first temperature sensor 127T1 may be in contact with a corresponding one of the plurality of battery cells 121. Accordingly, the first temperature sensor 127T1 may be interposed between the corresponding one of the plurality of battery cells 121 and the first sensor support part 127TS1.

The first temperature sensor 127T1 may be spaced apart from each of the plurality of cooling fins 122. One of the plurality of battery cells 121 and the plurality of pads 123 may be interposed between the first temperature sensor 127T1 and the plurality of cooling fins 122. Accordingly, incorrect measurement of a temperature by the first temperature sensor 127T1 due to high thermal conductivity of the plurality of cooling fins 122 may be prevented.

The first sensor support part 127TS1 may overlap the first portion 127I1 of the intermediate part 127I in the X-axis direction. The first sensor support part 127TS1 may be spaced apart from the first portion 127I1 of the intermediate part 127I with the first connection part 127U1 therebetween. The first sensor support part 127TS1 may be spaced apart from the first portion 127I1 of the intermediate part 127I with one of the plurality of battery cells 121 therebetween.

The first sensor support part 127TS1 may be connected to the first connection part 127U1. The first sensor support part 127TS1 may protrude from the first connection part 127U1 in the Z-axis direction. A length of the first sensor support part 127TS1 in the Z-axis direction may be greater than a thickness of the first sensor support part 127TS1 in the X-axis direction.

According to embodiments, the length of the first sensor support part 127TS1 in the Z-axis direction may be different from the length of the first portion 127I1 of the intermediate part 127I in the Z-axis direction. According to embodiments, the length of the first sensor support part 127TS1 in the Z-axis direction may be less than the length of the first portion 127I1 of the intermediate part 127I in the Z-axis direction.

According to embodiments, the length of the first sensor support part 127TS1 in the Z-axis direction may be determined according to a temperature monitoring position of the battery cell 121 . Accordingly, the length of the first sensor support part 127TS1 in the Z-axis direction may be equal to or greater than the length of the first portion 127I1 of the intermediate part 127I in the Z-axis direction.

The second sensor support part 127TS2 may be connected to the second connection part 127U2. A second temperature sensor 127T2 may be on the second sensor support part 127TS2. The second temperature sensor 127T2 may be coupled to the second sensor support part 127TS2, and a temperature of the battery cell 121 measured by the second temperature sensor 127T2 may be collected by the integrated circuit of the first integrated circuit assembly 124.

The second temperature sensor 127T2 may be interposed between a corresponding one of the plurality of battery cells 121 and a corresponding one of the plurality of pads 123. The second temperature sensor 127T2 may be in contact with a corresponding one of the plurality of battery cells 121. Accordingly, the second temperature sensor 127T2 may be interposed between the corresponding one of the plurality of battery cells 121 and the second sensor support part 127TS2.

The second temperature sensor 127T2 may be spaced apart from each of the plurality of cooling fins 122. One of the plurality of battery cells 121 and the plurality of pads 123 may be interposed between the second temperature sensor 127T2 and the plurality of cooling fins 122. Accordingly, incorrect measurement of a temperature by the second temperature sensor 127T2 due to high thermal conductivity of the plurality of cooling fins 122 may be prevented.

The second temperature sensor 127T2 may be closer to the second integrated circuit assembly 125 than the first temperature sensor 127T1. The first temperature sensor 127T1 may be closer to the first integrated circuit assembly 124 than the second temperature sensor 127T2.

A distance in the Y-axis direction between the second temperature sensor 127T2 and the second integrated circuit assembly 125 may be less than a distance in the Y-axis direction between the first temperature sensor 127T2 and the second integrated circuit assembly 125. A distance in the Y-axis direction between the second temperature sensor 127T2 and the first integrated circuit assembly 124 may be greater than a distance in the Y-axis direction between the first temperature sensor 127T2 and the first integrated circuit assembly 124.

Each of the first and second temperature sensors 127T1 and 127T2 may be spaced apart from the center of the battery cell 121 in the Y-axis direction. A distance in the Y-axis direction between the first temperature sensor 127T1 and the first integrated circuit assembly 124 may be different from a distance in the Y-axis direction between the center of the battery cell 121 in the Y-axis direction and the first integrated circuit assembly 124. The distance in the Y-axis direction between the first temperature sensor 127T1 and the first integrated circuit assembly 124 may be less than the distance in the Y-axis direction between the center of the battery cell 121 in the Y-axis direction and the first integrated circuit assembly 124.

A distance in the Y-axis direction between the second temperature sensor 127T2 and the second integrated circuit assembly 125 may be different from a distance in the Y-axis direction between the center of the battery cell 121 in the Y-axis direction and the second integrated circuit assembly 125. The distance in the Y-axis direction between the second temperature sensor 127T2 and the second integrated circuit assembly 125 may be less than the distance in the Y-axis direction between the center of the battery cell 121 in the Y-axis direction and the second integrated circuit assembly 125.

The distance in the Y-axis direction between the first temperature sensor 127T1 and the first integrated circuit assembly 124 may be different from the distance in the Y-axis direction between the center of the battery cell 121 in the Y-axis direction and the first temperature sensor 127T1. The distance in the Y-axis direction between the first temperature sensor 127T1 and the first integrated circuit assembly 124 may be less than the distance in the Y-axis direction between the center of the battery cell 121 in the Y-axis direction and the first temperature sensor 127T1.

The distance in the Y-axis direction between the second temperature sensor 127T2 and the second integrated circuit assembly 125 may be different from the distance in the Y-axis direction between the center of the battery cell 121 in the Y-axis direction and the second temperature sensor 127T2. The distance in the Y-axis direction between the second temperature sensor 127T2 and the second integrated circuit assembly 125 may be less than the distance in the Y-axis direction between the center of the battery cell 121 in the Y-axis direction and the second temperature sensor 127T2.

The second sensor support part 127TS2 may overlap the second portion 127I2 of the intermediate part 127I in the X-axis direction. The second sensor support part 127TS2 may be spaced apart from the second portion 127I2 of the intermediate part 127I with the second connection part 127U2 therebetween. The second sensor support part 127TS2 may be spaced apart from the first portion 127I1 of the intermediate part 127I with one of the plurality of battery cells 121 therebetween.

The second sensor support part 127TS2 may be connected to the second connection part 127U2. The second sensor support part 127TS2 may protrude from the second connection part 127U2 in the Z-axis direction. A length of the second sensor support part 127TS2 in the Z-axis direction may be greater than a thickness of the second sensor support part 127TS2 in the X-axis direction.

According to embodiments, the length of the second sensor support part 127TS2 in the Z-axis direction may be different from the length of the second portion 127I2 of the intermediate part 127I in the Z-axis direction. According to embodiments, the length of the second sensor support part 127TS2 in the Z-axis direction may be less than the length of the second portion 127I2 of the intermediate part 127I in the Z-axis direction.

According to embodiments, the length of the second sensor support part 127TS2 in the Z-axis direction may be determined according to a temperature monitoring position of the battery cell 121 . Accordingly, the length of the second sensor support part 127TS2 in the Z-axis direction may be equal to or greater than the length of the second portion 127I2 of the intermediate part 127I in the Z-axis direction.

According to embodiments, each of the FFC assemblies 127 may include the intermediate part 127I overlapping the plurality of battery cells 121 in the X-axis direction and substantially perpendicular to the X-axis direction. Accordingly, it is possible to prevent an increase in thermal resistance due to the FFC assemblies 127 and damage to the FFC assemblies 127 due to the cooling fins 122, and the reliability of the battery cell assembly 120 and the battery pack 100 including the battery cell assembly 120 may be improved.

### (Third Embodiment)

FIG. 7 illustrates an FFC assembly 127' according to other embodiments. The FFC assembly 127' may replace the FFC assembly 127 of FIG. 9.

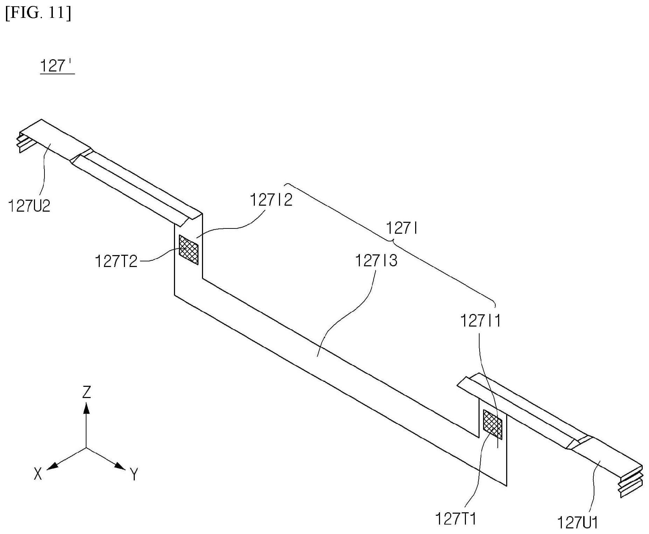

Referring to FIG. 11, according to embodiments, the FFC assembly 127' may include a first connection part 127U1, a second connection part 127U2, and an intermediate part 127I. That is, the FFC assembly 127' is the same as the FFC assembly 127 of FIG. 9, except that the FFC assembly 127' does not include the sensor support parts 127TS1 and 127TS2, a first temperature sensor 127T1 is on a first portion 127I1 of the intermediate part 127I and a second temperature sensor 127T2 is on a second portion 127I of the intermediate part 127I.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery cell assembly comprising:
a plurality of battery cells arranged in a first direction;
a plurality of cooling fins interposed between the plurality of battery cells;
a plurality of pads interposed between the plurality of battery cells;
a first integrated circuit assembly configured to be electrically connected to the plurality of battery cells;
a second integrated circuit assembly configured to be electrically connected to the plurality of battery cells and spaced apart from the first integrated circuit assembly in a second direction perpendicular to the first direction; and
a flat flexible cable (FFC) assembly interposed between the first and second integrated circuit assemblies,
wherein the FFC assembly includes an intermediate part overlapping the plurality of battery cells in the first direction.

2. The battery cell assembly of claim 1, wherein the FFC assembly includes a first connection part overlapping a first battery cell, which is one of the plurality of battery cells, in a third direction perpendicular to each of the first and second directions.

3. The battery cell assembly of claim 2, wherein the first connection part is connected to the first integrated circuit assembly.

4. The battery cell assembly of claim 3, wherein the FFC assembly further includes a second connection part overlapping the first battery cell in the third direction.

5. The battery cell assembly of claim 4, wherein the second connection part is connected to the second integrated circuit assembly.

6. The battery cell assembly of claim 4, wherein the second connection part is spaced apart from the first connection part with the intermediate part therebetween.

7. The battery cell assembly of claim 4, wherein each of the plurality of cooling fins includes a contact part overlapping the plurality of battery cells in the first direction and a heat dissipation part overlapping a corresponding one of the plurality of battery cells in the third direction, and
each of the first and second connection parts is interposed between the first battery cell and the heat dissipation part of one of the plurality of cooling fins.

8. The battery cell assembly of claim 4, wherein the FFC assembly further includes a first sensor support part spaced apart from the intermediate part in the first direction, and a second sensor support part spaced apart from the intermediate part in the first direction, and
the first sensor support part and the second sensor support part are spaced apart from each other in the second direction.

9. The battery cell assembly of claim 8, wherein the sensor support part is connected to the first connection part, and
the second sensor support part is connected to the second connection part.

10. The battery cell assembly of claim 8, wherein the FFC assembly further includes a first temperature sensor on the first sensor support part and a second temperature sensor on the second sensor support part.

11. The battery cell assembly of claim 10, wherein each of the first and second temperature sensors is spaced apart from each of the plurality of cooling fins.

12. The battery cell assembly of claim 10, wherein the first and second temperature sensors are interposed between the first battery cell and one of the plurality of pads.

13. The battery cell assembly of claim 1, wherein the intermediate part includes first and second portions extending in a third direction perpendicular to each of the first and second directions, and a third portion interposed between the first and second portions.

14. The battery cell assembly of claim 13, wherein the third portion extends in the second direction.
